# EUROPEAN PATENT APPLICATION

(11) **EP 2 723 084 A1**
(43) Date of publication of application: **23.04.2014**
(21) Application number: 13171012.1
(22) Date of filing: 07.06.2013
(51) Int. Cl.: H04N 21/00, H04N 21/442, H04N 5/782, H04N 5/76, H04N 21/41, H04N 5/445, H04N 21/422

(54) **Electronic apparatus, controlling method for electronic apparatus, and storage medium storing computer program**

(30) Priority: 18.10.2012 JP 2012231116
(71) Applicant: Kabushiki Kaisha Toshiba, Tokyo 105-8001 (JP)
(72) Inventor: Tokikura, Munehiro, Tokyo, 105-8001 (JP); Esaka, Naoki, Tokyo, 105-8001 (JP)
(74) Representative: HOFFMANN EITLE

(57) **Abstract**

According to one embodiment, an electronic apparatus configured to control of an external device capable of displaying a program on the basis of a broadcast signal includes, a memory (257) configured to store therein information on channels, a communication module (271) configured to communicate with the external device, retrieving module (255, 256) configured to retrieve information on channels which can be displayed by the external device from the external device, and a program guide generator (258) configured to generate a program guide on the basis of the information on channels stored in the memory, and to display the program guide comprising both first information of first channels which can be displayed by the external device and second information of second channels which cannot be displayed by the external device, wherein the first information and the second information are displayed in distinguishable manner.

## Description

Embodiments described herein relate generally to an electronic apparatus, controlling method for the electronic apparatus, and non-transitory computer-readable storage medium storing computer-executable instructions.

Heretofore, electronic apparatuses, for example, broadcast receiving apparatuses capable of receiving a broadcast signal, and reproducing the video content such as a program included in the received broadcast signal are widespread. Further, electronic apparatuses provided with a communication module configured to connect to a network, and provided with a function of accessing an address on the network are also widespread.

Further, an electronic apparatus provided with a display configured to display various information items, and touch sensor configured to generate a signal according to an operation of a user, and configured to transmit the signal generated by the touch sensor to a broadcast receiving apparatus such as the apparatus described above by wireless to thereby remotely operate the broadcast receiving apparatus has been put to practical use.

The above-mentioned electronic apparatus can acquire information on programs (program information) delivered by the broadcast signal from a server on the network. Furthermore, the electronic apparatus can display an electronic program guide (EPG) on the basis of the program information.

However, there is a case where a reception-available service provider (broadcasting station or the like) differs among broadcast receiving apparatuses. Accordingly, there is a problem that there is the possibility of a program displayed in the electronic program guide by an electronic apparatus being unable to be received by the broadcast receiving apparatus.

A general architecture that implements the various features of the embodiments will now be described with reference to the drawings. The drawings and the associated descriptions are provided to illustrate the embodiments and not to limit the scope of the invention.
FIG. 1 is an exemplary view showing an electronic apparatus according to an embodiment.
FIG. 2 is an exemplary view showing the electronic apparatus according to an embodiment.
FIG. 3 is an exemplary view showing the electronic apparatus according to an embodiment.
FIG. 4 is an exemplary view showing the electronic apparatus according to an embodiment.
FIG. 5 is an exemplary view showing the electronic apparatus according to an embodiment.
FIG. 6 is an exemplary view showing the electronic apparatus according to an embodiment.
FIG. 7 is an exemplary view showing the electronic apparatus according to an embodiment.
FIG. 8 is an exemplary view showing the electronic apparatus according to an embodiment.
FIG. 9 is an exemplary view showing the electronic apparatus according to an embodiment.
FIG. 10 is an exemplary view showing the electronic apparatus according to an embodiment.
FIG. 11 is an exemplary view showing the electronic apparatus according to an embodiment.
FIG. 12 is an exemplary view showing the electronic apparatus according to an embodiment.

Various embodiments will be described hereinafter with reference to the accompanying drawings. In general, according to one embodiment, an electronic apparatus configured to control of an external device capable of displaying a program on the basis of a broadcast signal comprises, a memory (257) configured to store therein information on channels, a communication module (271) configured to communicate with the external device, retrieving module (255, 256) configured to retrieve information on channels which can be displayed by the external device from the external device, and a program guide generator (258) configured to generate a program guide on the basis of the information on channels stored in the memory, and to display the program guide comprising both first information of first channels which can be displayed by the external device and second information of second channels which cannot be displayed by the external device, wherein the first information and the second information are displayed in distinguishable manner.

Hereinafter, an electronic apparatus, controlling method for the electronic apparatus, and non-transitory computer-readable storage medium storing computer-executable instructions according to an embodiment will be described in detail with reference the drawings.

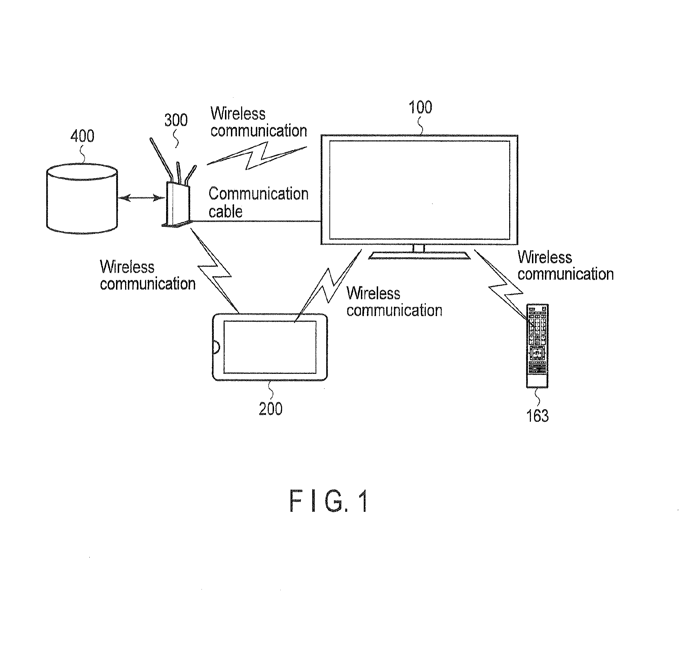

FIG. 1 shows an example of a system constituted of a plurality of electronic apparatuses. This system includes, for example, a content reproduction apparatus 100, mobile terminal 200, wireless communication terminal 300, and the like.

The content reproduction apparatus 100 is, for example, an electronic apparatus such as a broadcast receiving apparatus or the like capable of reproducing a broadcast signal or a video content, and the like stored in a storage medium. It should be noted that hereinafter descriptions will be given assuming that the content reproduction apparatus 100 is a broadcast receiving apparatus 100. Further, the broadcast receiving apparatus 100 is provide with a remote controller 163, mobile terminal 200, and communication module configured to communicate with the wireless communication terminal 300.

The mobile terminal 200 is an electronic apparatus provided with a display, operation module, and communication module. The mobile terminal 200 is, for example, a cellular phone unit, tablet PC, portable music player or some other electronic apparatus.

The wireless communication terminal 300 is provided with a mobile terminal 200, and communication module configured to communicate with the wireless communication terminal 300 by wireless. For example, the wireless communication terminal 300 functions as an access point of wireless communication. That is, the wireless communication terminal 300 can communicate with the broadcast receiving apparatus 100 by wireless or by a communication cable such as a LAN cable or the like.

Further, the wireless communication terminal 300 can communicate with the mobile terminal 200 by wireless. That is, the broadcast receiving apparatus 100, mobile terminal 200, and wireless communication terminal 300 are connected to each other through a network compatible with interactive communication.

For example, the broadcast receiving apparatus 100, and mobile terminal 200 are provided with a function of carrying out communication with the wireless communication terminal 300 on the basis of IEEE 802.11b/g/n or the like. Further, the broadcast receiving apparatus 100, and mobile terminal 200 may be provided with a function of carrying out direct communication with each other. That is, the broadcast receiving apparatus 100, and mobile terminal 200 can transmit/receive data to/from each other through the wireless communication terminal 300 or directly.

It should be noted that the mobile terminal 200 can transmit a control signal to the broadcast receiving apparatus 100 by wireless communication. That is, the mobile terminal 200 can function as a control apparatus configured to control the broadcast receiving apparatus 100 (apparatus to be controlled). It should be noted that an apparatus to be controlled is called a controlled apparatus. The broadcast receiving apparatus 100 (controlled apparatus) executes processing corresponding to a control signal (control command) from the control apparatus of the controlling side.

Further, the wireless communication terminal 300 can connect to an external network. That is, the wireless communication terminal 300 can access the Internet in accordance with a request from the broadcast receiving apparatus 100 or the mobile terminal 200 to access an address indicated by the request.

Thereby, the broadcast receiving apparatus 100, and mobile terminal 200 can communicate with a server (metadata server) 400 on the network through the wireless communication terminal 300.

The metadata server 400 includes a communication module, storage module, and control module. The communication module carries out communication with other apparatuses on the network. The storage module stores therein a plurality of object information items. The control module reads object information from the storage module, and controls communication carried out by the communication module.

The storage module of the metadata server 400 stores therein program information on programs of broadcasting stations delivered by broadcast signals. The program information includes, for example, information indicating a broadcasting station of each program, information indicating a broadcasting time, information indicating a category of a program, information indicating an outline of a program (program summary), information indicating details of a program (program detailed information), and the like.

The broadcast receiving apparatus 100, and mobile terminal 200 can acquire program information from the metadata server 400 on the network through the wireless communication terminal 300.

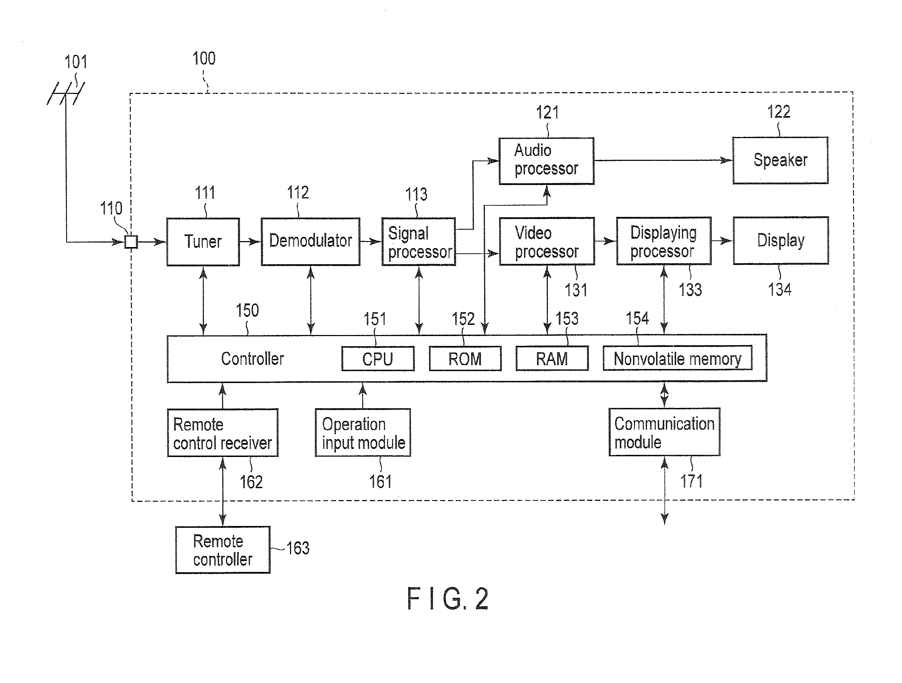

FIG. 2 shows an example of the broadcast receiving apparatus 100 according to the embodiment.

The broadcast receiving apparatus 100 is provided with a broadcast signal input terminal 110, tuner 111, demodulator 112, signal processor 113, audio processor 121, video processor 131, displaying processor 133, controller 150, operation input module 161, remote control receiver 162, and communication module 171. Further, the broadcast receiving apparatus 100 is further provided with a speaker 122, and display 134.

The broadcast signal input terminal 110 can receive, for example, a digital broadcast signal received by an antenna 101. The antenna 101 can receive, for example, a terrestrial digital broadcast signal, broadcasting satellite digital broadcast signal and/or 110 degree communication satellite (CS) digital broadcast signal. The broadcast signal input terminal 110 can receive data of a content such as a program or the like supplied by the above-mentioned digital broadcast signal.

The broadcast signal input terminal 110 supplies a received digital broadcast signal to the tuner 111. The tuner 111 is a tuner for the digital broadcast signal. The tuner 111 transmits a tuned digital broadcast signal to the demodulator 112.

The demodulator 112 demodulates the received digital broadcast signal. Thereby, the demodulator 112 acquires content data such as a transport stream (TS) or the like from the digital broadcast signal. The demodulator 112 inputs the acquired content data to the signal processor 113. That is, the antenna 101, tuner 111, and demodulator 112 function as a receiving module configured to receive content data.

The signal processor 113 carries out signal processing such as separation of content data, and the like. That is, the signal processor 113 separates content data into a digital video signal, digital audio signal, and other data signals. The signal processor 113 supplies an audio signal to the audio processor 121. Further, the signal processor 113 supplies a video signal to the video processor 131. Furthermore, the signal processor 113 supplies a data signal to the controller 150.

The audio processor 121 converts the digital audio signal received from the signal processor 113 into a signal (audio signal) of a format which can be reproduced by the speaker 122. For example, the audio processor 121 converts the digital audio signal into an audio signal by digital/analog conversion. The audio processor 121 supplies the audio signal to the speaker 122. The speaker 122 reproduces a sound on the basis of the audio signal supplied thereto.

The video processor 131 converts the digital video signal received from the signal processor 113 into a video signal of a format which can be reproduced by the display 134. That is, the video processor 131 decodes (reproduces) the digital video signal received from the signal processor 113 into a video signal of a format which can be reproduced by the display 134. The video processor 131 outputs the video signal to the displaying processor 133.

The displaying processor 133 subjects the received video signal to adjustment processing of image quality such as color, brightness, sharpness, contrast or others on the basis of, for example, control from the controller 150. The displaying processor 133 supplies the video signal which has been subjected to image quality adjustment to the display 134. The display 134 displays an image on the basis of the video signal supplied thereto.

The display 134 is provided with a liquid crystal display apparatus or the like provided with, for example, a liquid crystal display panel including a plurality of pixels arranged in a matrix-like form, and backlight configured to illuminate the liquid crystal panel. The display 134 displays an image on the basis of the video signal supplied thereto from the displaying processor 133.

The controller 150 functions as a controller configured to control an operation of each of the modules of the broadcast receiving apparatus 100. The controller 150 is provided with a CPU 151, ROM 152, RAM 153, nonvolatile memory 154, and the like. The controller 150 carries out various processing items on the basis of an operation signal supplied from the operation input module 161.

The CPU 151 is provided with arithmetic elements, and the like configured to execute various operation processing items. The CPU 151 realizes various functions by executing programs stored in the ROM 152, nonvolatile memory 154 or the like.

The ROM stores therein a program configured to control the broadcast receiving apparatus 100, programs configured to realize various functions, and the like. The CPU 151 initiates a program stored in the ROM 152 on the basis of an operation signal supplied thereto from the operation input module 161. Thereby, the controller 150 controls an operation of each module.

The RAM 153 functions as a working memory of the CPU 151. That is, the RAM 153 stores therein operation results of the CPU 151, data read by the CPU 151, and the like.

The nonvolatile memory 154 is a nonvolatile memory configured to store therein various setting information items, programs, and the like.

The controller 150 can generate various display items to be displayed by being superposed on an image displayed on the display 134.

The operation input module 161 is provided with, for example, an operation key, a touch pad or the like configured to generate an operation signal according to an operation input carried out by the user. Further, the operation input module 161 may also be configured to receive an operation signal from a keyboard, mouse, some other input device or the like capable of creating an operation signal. The operation input module 161 supplies an operation signal to the controller 150. It should be noted that the touch pad includes a capacitance sensor or a device configured to generate positional information on the basis of some other system.

The remote control receiver 162 is provided with, for example, a sensor or the like configured to receive an operation signal from the remote controller 163. The remote control receiver 162 supplies the received signal to the controller 150. The controller 150 receives the signal supplied from the remote control receiver 162, and decodes the original operation signal transmitted from the remote controller 163 by amplifying the received signal, and subjecting the amplified signal to A/D conversion.

The remote controller 163 generates an operation signal on the basis of an operation input of the user. The remote controller 163 transmits the generated operation signal to the remote control receiver 162 by infrared communication. It should be noted that the remote controller 163, and remote control receiver 162 may also be configured to carry out transmission/reception of an operation signal by wireless communication based on an electric wave or the like. The detailed configuration of the remote controller 163 will be described later.

The communication module 171 can carry out communication with other apparatuses on a network such as the Internet, home network or the like through the wireless communication terminal 300 by using a LAN or a wireless LAN. Thereby, the broadcast receiving apparatus 100 can communicate with other apparatuses connected to the wireless communication terminal 300.

Furthermore, the broadcast receiving apparatus 100 may also have a configuration in which the apparatus 100 is provided with a storage apparatus such as a hard disk drive (HDD) or the like and, for example, a content supplied by a broadcast signal, the network or the like can be stored in the storage apparatus.

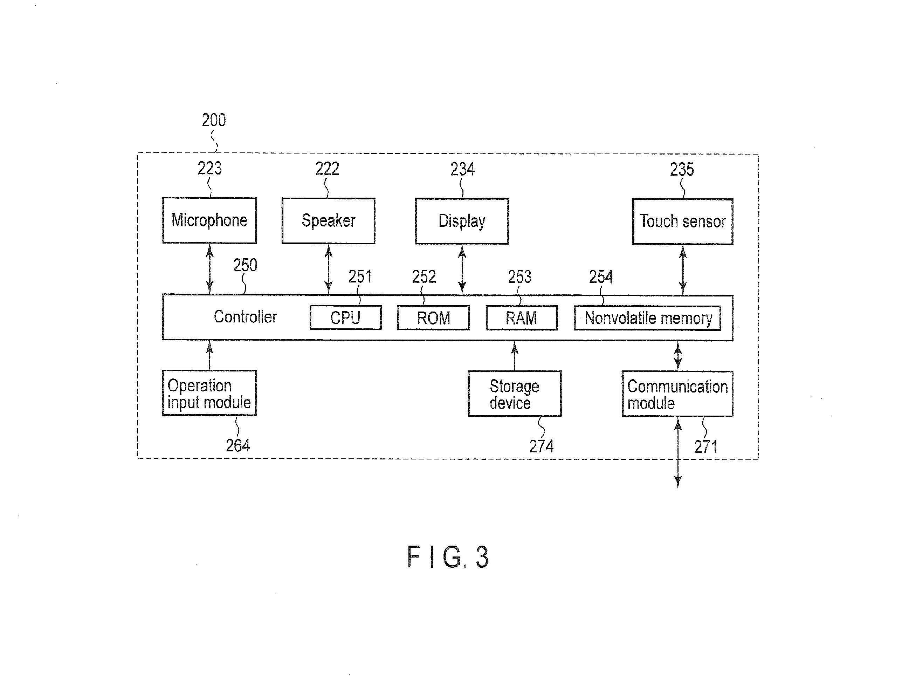

FIG. 3 shows an example of the mobile terminal 200 according to the embodiment.

The mobile terminal 200 is provided with a controller 250, operation input module 264, communication module 271, and storage device 274. Furthermore, the mobile terminal 200 is provided with a speaker 222, microphone 223, display 234, and touch sensor 235.

The controller 250 functions as a controller configured to control an operation of each module of the mobile terminal 200. The controller 250 is provided with a CPU 251, ROM 252, RAM 253, nonvolatile memory 254, and the like. The controller 250 carries out various processing items on the basis of an operation signal supplied from the operation input module 264 or the touch sensor 235.

The CPU 251 is provided with arithmetic elements, and the like configured to execute various operation processing items. The CPU 251 realizes various functions by executing programs stored in the ROM 252, nonvolatile memory 254 or the like.

The ROM 252 stores therein a program configured to control the mobile terminal 200, programs, and the like configured to realize various functions. The CPU 251 initiates a program stored in the ROM 252 on the basis of an operation signal supplied from the operation input module 264. Thereby, the controller 250 controls an operation of each module.

The RAM 253 functions as a working memory of the CPU 251. That is, the RAM 253 stores therein operation results of the CPU 251, data read by the CPU 251, and the like.

The nonvolatile memory 254 is a nonvolatile memory configured to store therein various setting information items, programs, and the like.

Further, the CPU 251 can execute various processing items on the basis of data such as an application stored in the storage device 274.

Further, the controller 250 can generate video signals of various screens or the like according to applications executed by the CPU 251, and display the resultants on the display 234. Further, the controller 250 can generate audio signals of various sounds or the like according to applications executed by the CPU 251, and output the resultants by the speaker 222.

The speaker 222 reproduces a sound on the basis of an audio signal supplied thereto.

The microphone 223 is a sound collecting module configured to generate a signal (sound-recording signal) on the basis of an external sound of the mobile terminal 200. The microphone 223 supplies a sound-recording signal to the controller 250.

The display 234 is provided with a liquid crystal display apparatus or the like provided with, for example, a liquid crystal display panel including a plurality of pixels arranged in a matrix-like form, and backlight configured to illuminate the liquid crystal panel. The display 234 displays an image on the basis of a video signal.

The touch sensor 235 is a capacitance sensor, thermal sensor or a device configured to generate positional information on the basis of some other system. For example, the touch sensor 235 is provided integral with the display 234. Thereby, the touch sensor 235 can generate an operation signal on the basis of an operation on the screen displayed on the display 234, and supply the operation signal to the controller 250.

The operation input module 264 is provided with, for example, a key configured to generate an operation signal according to an operation input carried out by the user. The operation input module 264 is provided with, for example, volume control key configured to adjust the sound volume, brightness control key configured to adjust the display brightness of the display 234, power supply key configured to switch the power supply state of the mobile terminal 200, and the like. Further, the operation input module 264 may further be provided with a trackball or the like configured to make the mobile terminal 200 execute various selection operations or the like. The operation input module 264 generates an operation signal according to an operation of each of the above-mentioned keys, and supplies the operation signal to the controller 250.

Further, the operation input module 264 may also be configured to receive an operation signal from a keyboard, mouse, some other input device or the like which can generate an operation signal. For example, when the mobile terminal 200 is provided with a USB terminal, Bluetooth (registered trade name) module or the like, the operation input module 264 receives an operation signal from an input device connected to the mobile terminal 200 by the USB terminal or the Bluetooth module, and supplies the operation signal to the controller 250.

The communication module 271 can carry out communication with other apparatuses on a network such as the Internet, home network or the like through the wireless communication terminal 300 by using a wireless LAN. Thereby, the mobile terminal 200 can communicate with other apparatuses connected to the wireless communication terminal 300. Further, the communication module 271 may also be configured to directly communicate with other apparatuses by a wireless LAN without the mediation of the wireless communication terminal 300. Further, the communication module 271 may also be configured to directly access a network such as a mobile telephone network without the mediation of the wireless communication terminal 300.

Further, the mobile terminal 200 is provided with a power supply module (not shown). The power supply module is provided with a battery, and terminal (for example, a DC jack) configured to connect to an adapter used to receive power from the commercial power supply or the like. The power supply module uses the power received from the commercial power supply to charge the battery. Further, the power supply module supplies the power stored in the battery to each module in the mobile terminal 200.

The storage device 274 is provided with a hard disk drive (HDD), solid state drive (SSD), semiconductor memory or the like. The storage device 274 can store therein a program, application, various data items, and the like to be executed or used by the CPU 251 of the controller 250.

The storage device 274 stores therein, for example, an operating system (OS), and various applications which can be executed on the OS. The storage device 274 stores therein, for example, an application (control application) configured to control the controlled apparatus (for example, broadcast receiving apparatus 100).

The control application is an application configured to control the broadcast receiving apparatus 100 such as a TV, Blu-ray recorder or the like. The controller 250 of the mobile terminal 200 can carry out control of an arbitrary broadcast receiving apparatus 100, and display of an electronic program guide by executing the control application.

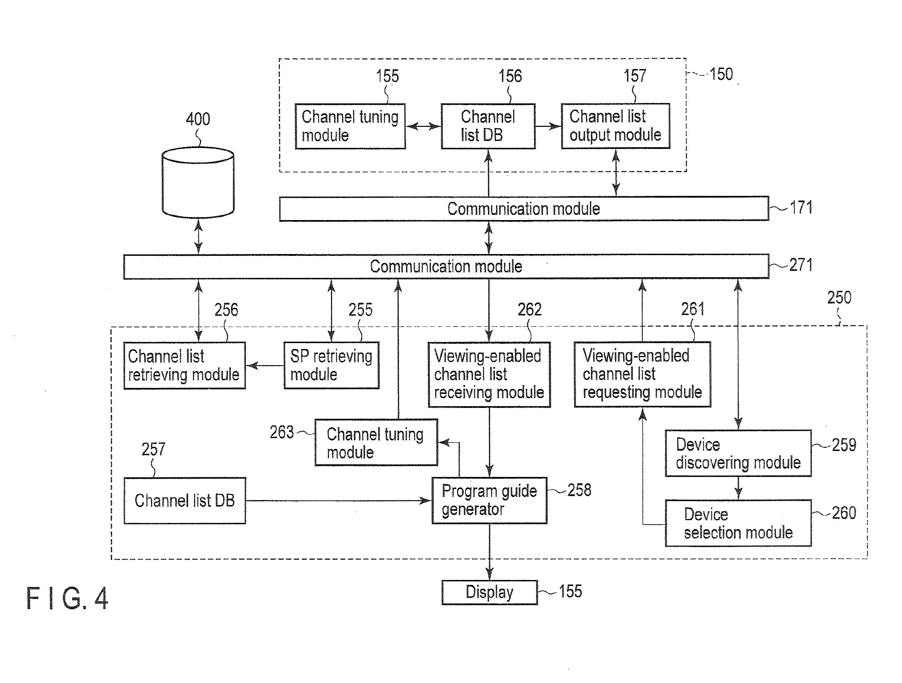

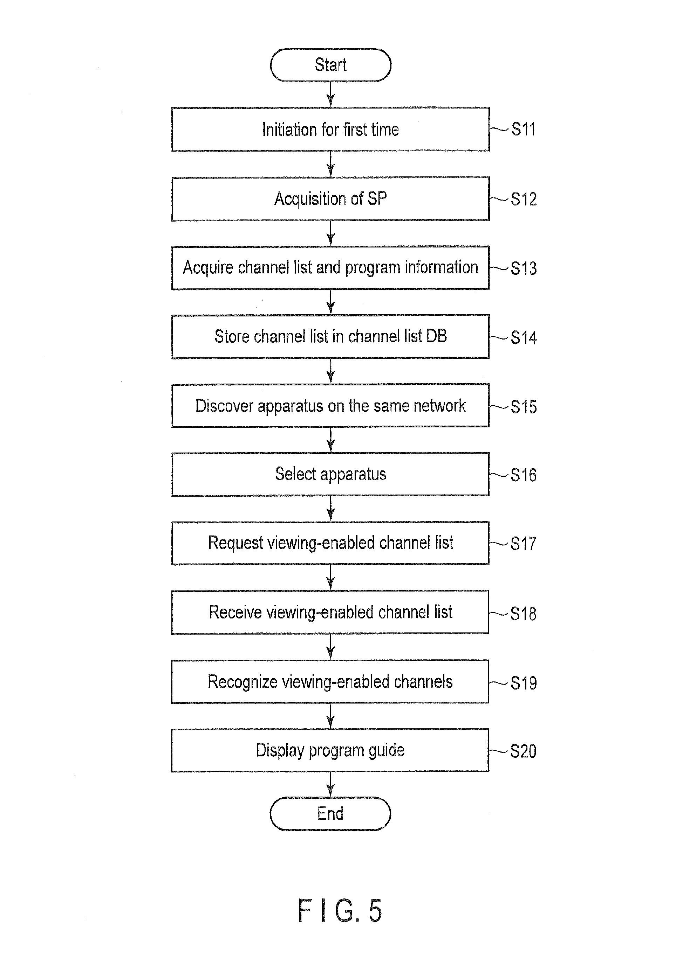

FIG. 4 shows an example of processing carried out by a control application. Further, FIG. 5 shows an example of a processing flow of the mobile terminal 200 which has executed a control application.

The controller 150 of the broadcast receiving apparatus 100 is provided with a channel tuning module 155 constituted of software and hardware, channel list database (channel list DB) 156, and channel list output module 157.

The channel tuning module 155 selects a broadcast signal according to an operation input. That is, the channel tuning module 155 selects a program (or service provider (SP) providing programs) to be displayed by the broadcast receiving apparatus 100 according to an operation input.

The channel list database (DB) 156 stores therein a list of information items indicating SPs (or channels in the SPs) which can be displayed by the broadcast receiving apparatus 100 as a database. Here, although a description is given by assuming that availability/unavailability of viewing is set for each channel in an SP, even in a configuration in which availability/unavailability of viewing is set for each SP, it is sufficient if information indicating a channel is replaced with information indicating an SP. The channel list DB 156 stores therein information (viewing-available channel list) indicating channels in SPs which can be viewed by the broadcast receiving apparatus 100. That is, the channel list DB 156 stores therein information (viewing-available channel list) indicating channels in SPs which can be displayed by the broadcast receiving apparatus 100 on the basis of a broadcast signal. In other words, the channel list DB 156 stores therein information items on channels which can be displayed by the broadcast receiving apparatus 100.

The channel list output module 157 outputs a list of viewing-available channels stored in the channel list DB 156, and can be demodulated by the broadcast receiving apparatus 100 to the mobile terminal 200 according to a request from the mobile terminal 200.

The controller 250 of the mobile terminal 200 is provided with an SP retrieving module 255 constituted of software or hardware, channel list retrieving module 256, channel list DB 257, program guide generator 258, device discovering module 259, device selection module 260, viewing-available channel list requesting module 261, viewing-available channel list receiving module 262, and channel tuning module 263. The controller 250 can realize these modules by executing the above-mentioned control application.

It is assumed that the controller 250 of the mobile terminal 200 initiates the control application for the first time (step S11). In this case, the controller 250 acquires information indicating a service provider from the metadata server 400 (step S12).

The SP retrieving module 255 acquires a service provider (SP) list by carrying out communication with the metadata server 400. The SP retrieving module 255 acquires a list of SPs stored in the metadata server 400 or a list of SPs corresponding to the control application. Furthermore, the SP retrieving module 255 may also be configured to select a specific SP from the acquired SP list.

The channel list retrieving module 256 acquires a list of channels belonging to the acquired SPs, and program information of each channel from the metadata server 400 (step S13). That is, the channel list retrieving module 256 acquires information on the channels.

The channel list retrieving module 256 stores the acquired information on the channels (channel list) in the channel list DB 257 (step S14). Further, the channel list retrieving module 256 stores the acquired program information of each channel in the channel list DB 257 in such a manner that the acquired program information of each channel, and the channel list are correlated with each other.

The channel list DB 257 retains the acquired SP list, channel list, and program information of each channel. That is, the channel list DB 257 stores therein information on the channels acquired by the channel list retrieving module 256.

The program guide generator 258 can generate a screen of an electronic program guide on the basis of the SP list, channel list, and program information on each channel which are retained in the channel list DB 257. The program guide generator 258 can display the generated electronic program guide on the display 234.

The device discovering module 259 discovers a broadcast receiving apparatus 100 present on the same network (step S15). For example, the device discovering module 259 discovers a broadcast receiving apparatus 100 connected to a home network constructed through the wireless communication apparatus 300. For example, the device discovering module 259 can discriminate among the broadcast receiving apparatuses 100 by using preset device names, MAC addresses or other discrimination information.

The device selection module 260 selects at least one of the broadcast receiving apparatuses 100 discovered by the device discovering module 259 (step S16). When the number of the broadcast receiving apparatus 100 discovered by the device discovering module 259 is one, the device selection module 260 selects the broadcast receiving apparatus 100 discovered by the device discovering module 259 as it is. Further, when the number of the broadcast receiving apparatuses 100 discovered by the device discovering module 259 is plural, the device selection module 260 selects one or more broadcast receiving apparatuses 100 in accordance with the operation input, default setting or preset conditions.

The viewing-available channel list requesting module 261 transmits a command (viewing-available channel list request) to request a viewing-available channel list to the broadcast receiving apparatuses 100 selected by the device selection module 260 (step S17).

Upon receipt of the viewing-available channel list request, the channel list output module 157 of the broadcast receiving apparatus 100 transmits the viewing-available channel list stored in the channel list DB 156 to the mobile terminal 200 which has transmitted the viewing-available channel list request to the apparatus 100.

The viewing-available channel list receiving module 262 receives the information on the channels (viewing-available channel list) transmitted from the broadcast receiving apparatus 100, and supplies the received viewing-available channel list to the program guide generator 258 (step S18). That is, the viewing-available channel list requesting module 261, and viewing-available channel list receiving module 262 can supply the viewing-available channel list of the broadcast receiving apparatus 100 selected by the device selection module 260 to the program guide generator 258. In other words, the viewing-available channel list requesting module 261, and viewing-available channel list receiving module 262 function as a retrieving module configured to acquire information on the channels which can be displayed by the broadcast receiving apparatus 100 serving as the external apparatus from the broadcast receiving apparatus 100.

The program guide generator 258 can recognize the channel which can be displayed by the broadcast receiving apparatus 100 selected by the device selection module 260 on the basis of the information on the channels (viewing-available channel list) supplied from the viewing-available channel list receiving module 262 (step S19). Furthermore, the program guide generator 258 can specifically display the channel which can be displayed by the broadcast receiving apparatus 100 selected by the device selection module 260 on the program guide.

For example, the program guide generator 258 compares the information on the channels (viewing-available channel list) supplied thereto from the viewing-available channel list receiving module 262, and channel list retained in the channel list DB 257 with each other. Thereby, the program guide generator 258 can recognize the channels which can be displayed by the broadcast receiving apparatus 100 (viewing-available channels), and channels which cannot be displayed by the broadcast receiving apparatus 100 (viewing-unavailable channels) among the channels of the channel list retained in the channel list DB 257.

The program guide generator 258 generates a program guide on the basis of the recognition result. The program guide generator 258 displays the generated program guide on the display 234 (step S20).

It should be noted that the program guide generator 258 displays the recognized viewing-available channels, and viewing-unavailable channels in the program guide by using different display methods.

The channel tuning module 263 can transmit a channel selection request to the broadcast receiving apparatus 100 according to an operation on the program guide.

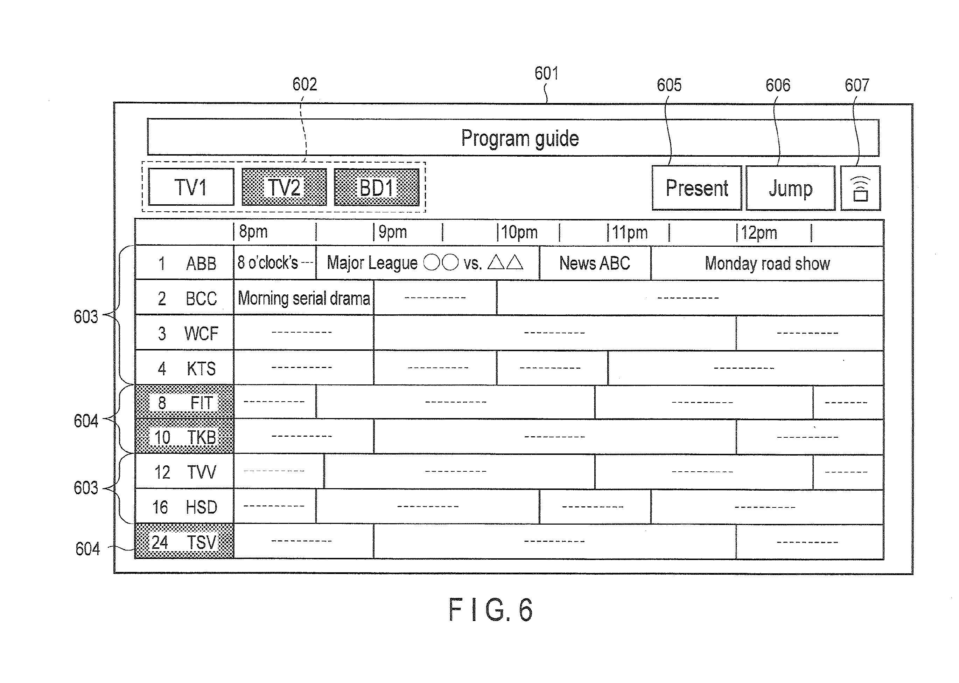

FIG. 6 shows an example of a screen of a program guide.

The program guide generator 258 generates lists of programs of the SPs as a program guide. The program guide generator 258 displays a list of the SPs in the program guide. It should be noted that the program guide generator 258 can simultaneously display information on a plurality of service providers on the program guide. For example, the program guide generator 258 can display the terrestrial digital broadcast, BS digital broadcast, and 110 degree CS digital broadcast, and the like as one program guide. It should be noted that the program guide generator 258 can change the size of the display area of channels according to the operation.

In the initial state, the program guide generator 258 displays all the acquired lists of channels in the program guide. Further, the program guide generator 258 may also be configured to retain the display state of the program guide of the last time, and reconstitute the display state of the last time when the program guide is initiated.

For example, the program guide generator 258 displays the channel list in the longitudinal direction. Furthermore, the program guide generator 258 displays the program list for each channel in the lateral direction. Furthermore, the program guide generator 258 may also display program information in the column of each program. Further, the program guide generator 258 displays the past programs in a grayed-out (dimmed) state.

Further, the program guide generator 258 can slide the program guide according to an operation input. That is, when an operation of laterally sliding the program guide is input, the program guide generator 258 can slide the program guide according to the operation.

Further, the program guide generator 258 displays device selection buttons 602 in the program guide. The device selection buttons 602 are buttons by which each of devices discovered by the device discovering module 259 can be selected. In the example of FIG. 6, a state where "TV1", "TV2", and "BD1" are discovered, and "TV1" is selected is shown.

Further, the program guide generator 258 displays a "present" button 605, "jump" button 606, and remote controller button 607 in the program guide. These buttons will be described later.

For example, it is assumed that channels which can be viewed by "TV1" are "channels 1, 2, 3, 4, 12, and 16". In this case, the program guide generator 258 receives information indicating "channels 1, 2, 3, 4, 12, and 16" as the viewing-available channel list from TV1. The program guide generator 258 recognizes channels which can be viewed by TV1, and channels which cannot be viewed by TV1 according to the received viewing-available channel list.

The program guide generator 258 displays the columns of channel names of channels 603 which can be viewed by TV1 by indication different from the columns of channel names of channels 604 which cannot be viewed by TV1. For example, the program guide generator 258 displays the background of the columns of the channel names of the channels 603 in a bright color such as white. Furthermore, the program guide generator 258 displays the background of the columns of the channel names of the channels 604 in a dark color such as gray. By carrying out display in the manner described above, the program guide generator 258 can make the user recognize the channels which can be viewed by TV1, and channels which cannot be viewed by TV1.

It should be noted that the program guide generator 258 may also be configured to display the background of each program column of the channels 603 in a bright color such as white, and display the background of each program column of the channels 604 in a dark color such as gray. Further, the background colors are not limited to white and gray, and the program guide generator 258 may also be configured to display the background in any color if only clear distinction can be obtained.

Furthermore, the program guide generator 258 may also be configured to distinguishably display the viewing-available channels, and viewing-unavailable channels not by color but by some other different method.

As described above, the mobile terminal 200 can display the program guide in a state where service providers which can be received are clearly indicated for each broadcast receiving apparatus 100.

That is, the program guide generator 258 carries out display control in such a manner that channels or SPs are distinguishably displayed in the program guide according to availability/unavailability of viewing associated with the broadcast receiving apparatus 100. Thereby, the mobile terminal 200 can make the user recognize the availability/unavailability of viewing associated with the broadcast receiving apparatus 100. As a result, it is possible to provide an electronic apparatus, controlling method for the electronic apparatus, and non-transitory computer-readable storage medium storing computer-executable instructions all of which offer a higher degree of convenience.

Further, the mobile terminal 200 may also be configured to display channels which can be viewed by means of a plurality of broadcast receiving apparatuses 100 in the program guide in a unifying manner. That is, the program guide generator 258 may also be configured to display channels which can be viewed by one of "TV1" and "TV2", and channels which cannot be viewed by both of "TV1" and "TV2" in the program guide in a distinguishing manner.

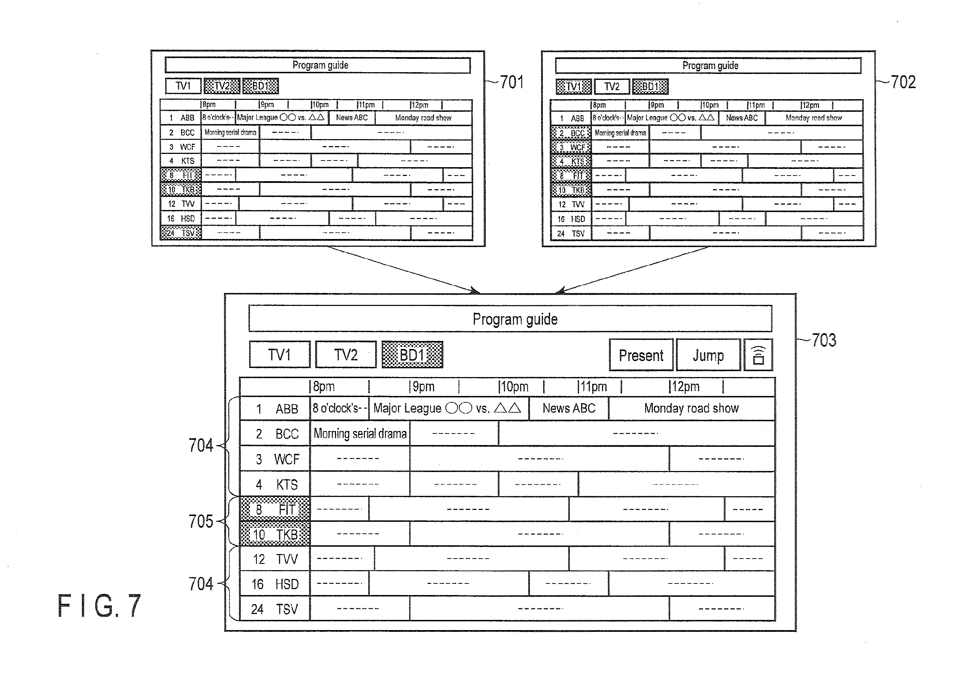

As described above, it is assumed that channels which can be viewed by "TV1" are "channels 1, 2, 3, 4, 12, and 16", and channels which can be viewed by "TV2" are "channels 1, 12, 16, and 24". In this case, as shown in FIG. 7, the program guide generator 258 can generate a program guide 701 in which the viewing-available channels of "TV1" are clearly indicated, and program guide 702 in which the viewing-available channels of "TV2" are clearly indicated.

For example, a state where "TV1", "TV2", and "BD1" are discovered by the device discovering module 259, and "TV1" and "TV2" are selected is assumed. In this case, the program guide generator 258 generates a program guide 703 formed by unifying the program guide 701, and program guide 702 into one program guide.

According to the above example, the "channels 1, 2, 3, 4, 12, 16, and 24" are channels 704 which can be viewed by one of "TV1" and "TV2", and the "channels 8, and 10" are the channels 705 which cannot be viewed by both of "TV1" and "TV2".

The program guide generator 258 displays the channels 704 which can be viewed by one of the broadcast receiving apparatuses 100 in the network, and channels 705 which cannot be viewed even by any one of the broadcast receiving apparatuses 100 in the network in the program guide in a distinguishable state. That is, the program guide generator 258 displays the viewing-available channels, and viewing-unavailable channels in the program guide in a distinguishable state according to a logical sum of channels which can be viewed by a plurality of broadcast receiving apparatuses 100.

Thereby, the program guide generator 258 can make the user recognize the channels which can be viewed by one of the broadcast receiving apparatuses 100 in the network, and channels which cannot be viewed even by any one of the broadcast receiving apparatuses 100 in the network.

Further, the controller 250 can execute various processing items according to an operation carried out while the program guide is displayed.

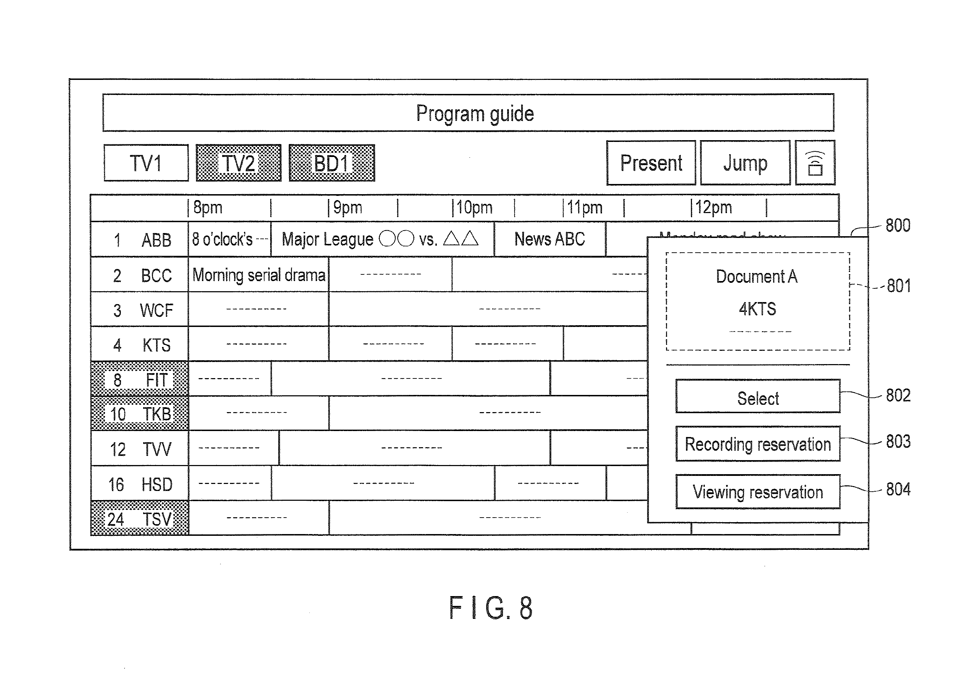

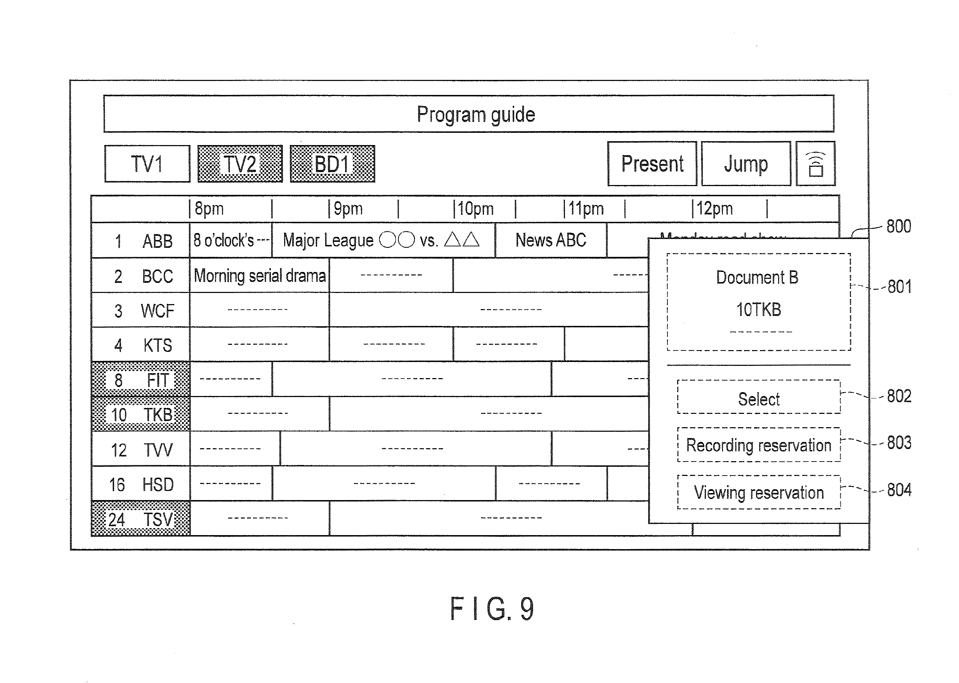

For example, when an operation of selecting a program column displayed in the program guide is input, the program guide generator 258 displays a window 800 including a plurality of buttons configured to make the user select an operation for a program corresponding to the selected program column on the program guide in a superposing manner as shown in FIG. 8, and FIG. 9.

The window 800 includes display of program information 801 of the selected program, a "select" button 802, "recording reservation" button 803, "viewing reservation" button 804, and the like.

For example, when a program column of a viewing-available channel is selected, the program guide generator 258 displays the "select" button 802, "recording reservation" button 803, and "viewing reservation" button 804 in the window 800 in a selectable state as shown in FIG. 8.

Further, for example, when a program column of a viewing-unavailable channel is selected, the program guide generator 258 displays the "select" button 802, "recording reservation" button 803, and "viewing reservation" button 804 in the window 800 in an unselectable state as shown in FIG. 9.

When the "select" button 802 is selected, the channel tuning module 263 of the controller 250 transmits a channel selection request to the broadcast receiving apparatus 100. Upon receipt of the channel selection request transmitted from the mobile terminal 200, the broadcast receiving apparatus 100 selects a channel indicated by channel the selection request.

Further, the controller 250 may also be configured to make the user select a broadcast receiving apparatus 100 to which a channel selection request is to be transmitted when the selected program can be viewed by a plurality of broadcast receiving apparatuses 100. In this case, the controller 250 determines a broadcast receiving apparatus 100 to which the channel selection request is to be transmitted according to an operation input carried out by the user. The channel tuning module 263 transmits the channel selection request to the determined broadcast receiving apparatus 100.

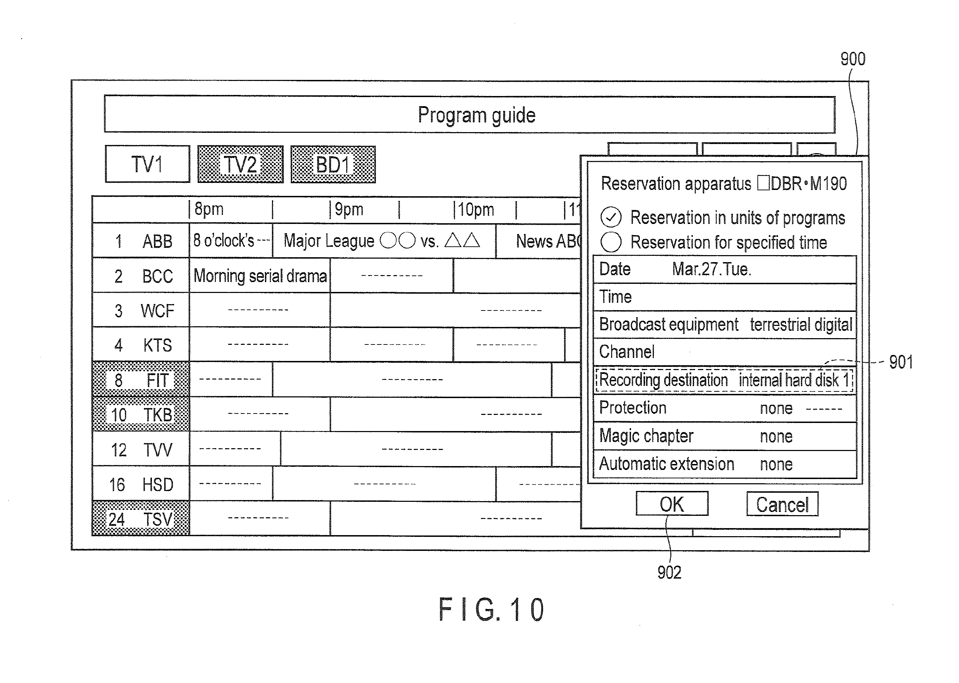

Further, when the "recording reservation" button 803 is selected, the controller 250 displays a window 900 including detailed information on recording on the program guide in a superposing manner as shown in FIG. 10.

The window 900 includes display of a selection column 901 used to select a broadcast receiving apparatus 100 of the recording destination, information indicating a program of the recording object, "OK" button 902, and the like.

For example, when the selection column 901 is selected, the controller 250 displays a list of the apparatuses discovered by the device discovering module 259 in the selection column 901 in a selectable state. The controller 250 selects an apparatus to be made to record the program according to an operation in the selection column 901. Furthermore, when the "OK" button 902 is selected, the controller 250 transmits a recording request to the broadcast receiving apparatus 100 selected in the selection column 901. Upon receipt of the recording request transmitted from the mobile terminal 200, the broadcast receiving apparatus 100 sets recording reservation of the program indicated by the recording request. Thereby, the mobile terminal 200 can make the broadcast receiving apparatus 100 execute recording reservation of the program from the program guide.

Further, when the "viewing reservation" button 804 is selected, the controller 250 displays a window including detailed information on the program on the program guide in a superposing manner. In this case too, the window includes display of a selection column used to select a broadcast receiving apparatus 100 to be made to execute viewing reservation.

The controller 250 selects an apparatus to be made to execute viewing reservation of the program according to an operation of the selection column. The controller 250 transmits a viewing request to the broadcast receiving apparatus 100 selected in the selection column according to the operation. Upon receipt of the viewing request transmitted from the mobile terminal 200, the broadcast receiving apparatus 100 sets viewing reservation of the program indicated by the viewing request. Thereby, the mobile terminal 200 can make the broadcast receiving apparatus 100 execute viewing reservation of the program from the program guide.

Further, when the "present" button 605 in the program guide is selected, the program guide generator 258 of the controller 250 switches the display of the program guide to the display of the present time. That is, the program guide generator 258 controls the display of the program guide in such a manner that the program column of the program currently broadcast comes to the left end of the program guide.

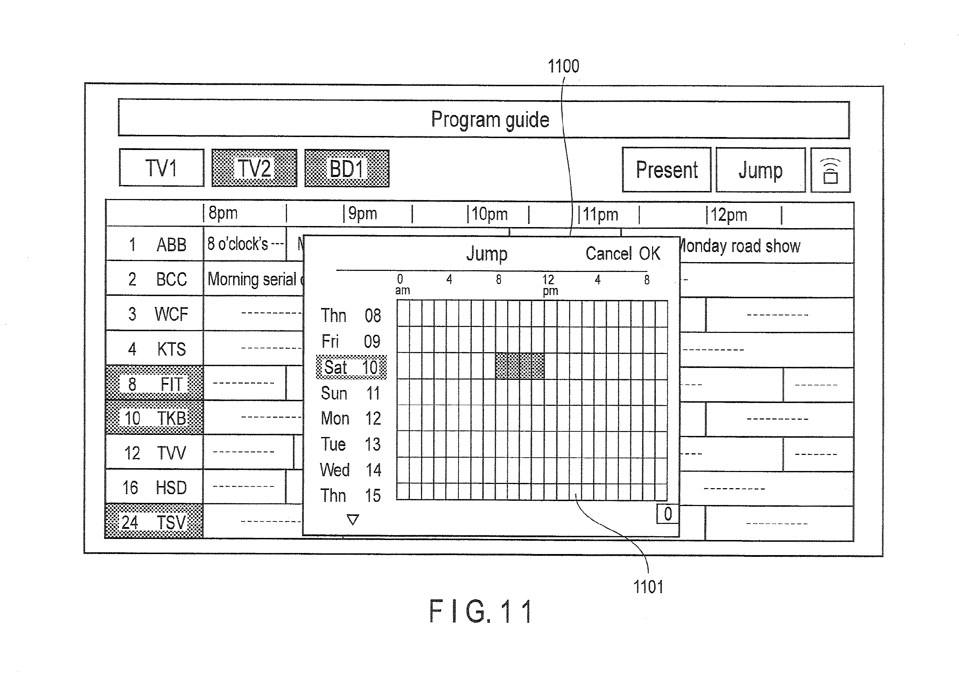

Further, when the "jump" button 606 in the program guide is selected, the program guide generator 258 of the controller 250 displays a window 1100 shown in FIG. 11 on the program guide in a superposing manner.

The window 1100 includes display columns 1101 configured to make the user select a time slot. In the display columns 1101, the axis of ordinate indicates the date, and axis of abscissa indicates the time. The program guide generator 258 selects the date and time according to an operation in the display columns 1101. The program guide generator 258 switches the display of the program guide to the display of the selected date and time. That is, the program guide generator 258 controls the display of the program guide in such a manner that the program column of the selected date and time comes to the left end of the program guide.

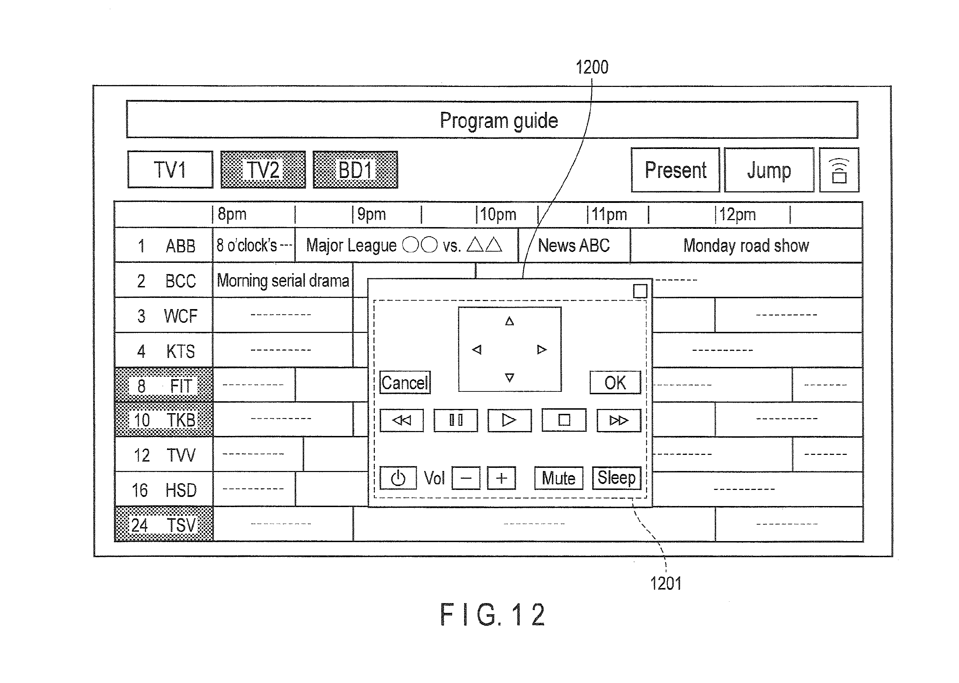

Further, when the remote controller button 607 in the program guide is selected, the program guide generator 258 of the controller 250 displays a window 1200 shown in FIG. 12 on the program guide in a superposing manner.

The window 1200 includes, for example, a control panel 1201 including a plurality of buttons corresponding to the keys of the remote controller 163 of the broadcast receiving apparatus 100. The control panel 1201 includes, for example, a plurality of buttons such as a play button, stop button, fast-forward button, fast-rewind button, pause button, cursor button, volume control button, select button, power button, and the like.

The controller 250 generates a control signal according to an operation input on the control panel 1201. The controller 250 transmits the generated control signal to the apparatus selected by the device selection button 602. It should be noted that when remote control cannot be carried out, the program guide generator 258 displays the buttons in the control panel 1201 in an unselectable state.

As described above, the controller 250 can operate as a remote controller specializing in each broadcast receiving apparatus 100 by executing the control application. As a result, it is possible to provide an electronic apparatus, controlling method for the electronic apparatus, and non-transitory computer-readable storage medium storing computer-executable instructions all of which offer a higher degree of convenience.

## Claims

1. An electronic apparatus configured to control of an external device capable of displaying a program on the basis of a broadcast signal **characterized by** comprising:
a memory (257) configured to store therein information on channels;
a communication module (271) configured to communicate with the external device;
retrieving module (255, 256) configured to retrieve information on channels which can be displayed by the external device from the external device; and
a program guide generator (258) configured to generate a program guide on the basis of the information on channels stored in the memory, and to display the program guide comprising both first information of first channels which can be displayed by the external device and second information of second channels which cannot be displayed by the external device, wherein the first information and the second information are displayed in distinguishable manner.

2. The electronic apparatus of claim 1, **characterized by** further comprising a channel selection requesting module (263) configured to request the external device to select a program by an operation input on the program guide, wherein
when the second channels are selected by an operation input on the program guide, the channel selection requesting module annuls the channel selection request.

3. The electronic apparatus of claim 1, **characterized by** further comprising a selection module (260) configured to, when a plurality of external devices are connected to the electronic apparatus, select at least one of the plurality of external devices, wherein
the retrieving module acquires the first information and the second information from the external device selected by the selection module.

4. The electronic apparatus of claim 3, **characterized in that** when the plurality of external devices are selected by the selection module, the program guide generator distinguishably displays the first channels and the second channels in the program guide according to the first information and the second information of the plurality of external devices.

5. The electronic apparatus of claim 1, **characterized by** further comprising a display module (234) configured to display the program guide generated by the program guide generator.

6. A controlling method for an electronic apparatus (200) including a memory (257) configured to store therein information on channels, and configured to control of an external device used to display a program on the basis of a broadcast signal **characterized by** comprising:
retrieving information on channels which can be displayed by the external device from the external device;
generating a program guide on the basis of the information on channels stored in the memory; and
displaying the program guide comprising both first information of first channels which can be displayed by the external device, and second information of second channels which cannot be displayed by the external device, wherein the first information and the second information are displayed in distinguishable manner.

7. A non-transitory computer-readable storage medium storing computer-executable instructions that, when executed, cause a computer including a memory (257) configured to store therein information on channels, and configured to control of an external device used to display a program on the basis of a broadcast signal to
retrieve information on channels which can be displayed by the external device from the external device,
generate a program guide on the basis of the information on channels stored in the memory, and to display the program guide **characterized by** comprising both first information of first channels which can be displayed by the external device, and second information of second channels which cannot be displayed by the external device, wherein the first information and the second information are displayed in distinguishable manner.
